# EUROPEAN PATENT APPLICATION

(11) **EP 4 729 649 A1**
(43) Date of publication of application: **22.04.2026**
(21) Application number: 24839342.3
(22) Date of filing: 28.05.2024
(51) Int. Cl.: C22C 38/00, B23K 9/16, B23K 9/23, B23K 9/167, B23K 35/30, C22C 38/04, C22C 38/58

(54) **MOLDED JOINT BY GAS-TUNGSTEN ARC WELDING AND PRODUCTION METHOD THEREFOR**

(30) Priority: 13.07.2023 JP 2023115178; 13.07.2023 JP 2023115179
(71) Applicant: JFE Steel Corporation, Tokyo, 100-0011 (JP)
(72) Inventor: WATANABE, Kazufumi, Tokyo 100-0011 (JP); ANDO, Akiyoshi, Tokyo 100-0011 (JP)
(74) Representative: Grünecker Patent- und Rechtsanwälte PartG mbB
(86) International application number: PCT/JP2024/019498
(87) International publication number: WO 2025/013445

(57) **Abstract**

The present invention provides, in the form of a welded joint for high-Mn steel to be used in cryogenic environments, a gas tungsten arc welding technology that can achieve further improvement of the strength of weld metal and enhanced inhibition of formation of hot cracks. Provided is a gas tungsten arc-welded joint of pieces of a steel material produced using a shielding gas and a filler metal. The steel material is austenitic steel with a high Mn content. Chemical composition of the weld material includes, in mass%, C: 0.15 to 0.80%, Si: 0.10 to 1.00%, Mn: 17.0 to 30.0%, P: 0.030% or less, S: 0.030% or less, Al: 0.005 to 0.100%, Cr: 0.4 to 5.5%, Mo: 0.01 to 3.50%, Ni: 0.01 to 10.00%, and N: 0.0400 to 0.4000%, with the balance being composed of Fe and unavoidable impurities. Further provided is a production method of a welded joint in which a nitrogen gas is contained in a shielding gas, or a content of N in a filler metal is increased, to form the above-described weld metal.

## Description

### Technical Field

The present invention relates to a gas tungsten arc-welded joint and a production method thereof, and relates particularly to a welded joint of an austenitic steel material with a high Mn content to be used in cryogenic environments, and a production method thereof. The expression "x to y" indicating a numerical range means x or more and y or less, with boundary values included. The unit of volume "L" means 10⁻³ m³.

### Background Art

The gas tungsten arc welding method is a method that uses tungsten, which is a non-consumable material, for an electrode rod, and produces a weld by melting a filler metal (filler rod) in an arc while blocking atmospheric air by spraying typically an argon gas or a helium gas that is an inert gas. This welding is also called tungsten-inert gas welding (hereinafter also referred to as "TIG welding" for short). TIG welding can be applied to more complicated shapes, including various alloy steels and non-ferrous metals, and can achieve excellent welding quality.

In recent years, environmental regulations have been becoming stringent. Against this background, there is a growing demand for liquefied natural gas (hereinafter also referred to as "LNG"), which is said to be a clean fuel as it does not contain sulfur and therefore does not generate air pollutants such as sulfur oxide. Containers (tanks) for transporting or holding the LNG to transport or store the LNG are required to maintain excellent cryogenic impact toughness at temperatures not higher than -162°C, the liquefying temperature of the LNG.

Due to this necessity of maintaining excellent cryogenic impact toughness, aluminum alloys, 9%-Ni-steel, austenitic stainless steel, etc. have been conventionally used as the materials of containers (tanks) etc.

However, aluminum alloys have low tensile strength, which makes it necessary to design the wall of a structure to be thick. Another problem is low weldability. As for 9%-Ni-steel, it is necessary to use an expensive Ni-base material as the welding material, which is economically disadvantageous.

As a solution, a TIG welding technology using austenitic stainless steel has been explored.

For example, Patent Literature 1 discloses an austenitic steel welded joint produced by welding together pieces of austenitic steel base metal having a specific composition by a gas tungsten arc welding method using an austenitic steel welding material having a specific composition. The weld metal is composed mainly of C ≤ 0.1%, Si ≤ 0.8%, Mn: 1.5 to 5.5%, Ni: 8 to 15%, Cr: 18 to 24%, Al < 0.05%, and N: 0.15 to 0.35%, and an amount of ferrite in the weld metal is 20% or less as an area ratio. Further, it is mentioned that, in gas tungsten arc welding, 50 vol% or less N₂ gas is mixed into a shielding gas in addition to an Ar gas.

However, one problem with austenitic stainless steel is that it is expensive as well as has low base metal strength. Given that, consideration has been recently given to adopting austenitic steel with a high Mn content (hereinafter also referred to as "high-Mn steel") that contains about 10 to 35 mass% Mn as the material of a container (tank) for transporting or holding LNG. Even at cryogenic temperatures, the metallographic structure of high-Mn steel has an austenite phase and does not develop a brittle fracture. Further, high-Mn steel is characterized by having high strength compared with austenitic stainless steel. As such, it has been desired to develop a welding material that makes it possible to stably weld together pieces of such high-Mn steel.

In response to this desire, for example, Patent Literature 2 discloses "high-Mn steel material for cryogenic applications." This steel material contains, in mass%, C: 0.001 to 0.80%, Mn: 15.0 to 35.0%, S: 0.001 to 0.01%, Cr: 0.01 to 10.0%, Ti: 0.001 to 0.05%, N: 0.0001 to 0.10%, and O: 0.001 to 0.010%. P is restricted to 0.02% or less. One or both of Si: 0.001 to 5.00% and Al: 0.001 to 2.0% are contained, and one type or two or more types among Mg: 0.01% or less, Ca: 0.01% or less, and REM: 0.01% or less are contained at 0.0002% or more in total. Further, this steel material satisfies 30C + 0.5Mn + Ni + 0.8Cr + 1.2Si + 0.8Mo ≥ 25 ··· (Expression 1), and O/S ≥ 1 ··· (Expression 2), and the balance thereof is composed of Fe and unavoidable impurities. In this high-Mn steel material for cryogenic applications, the volume ratio of austenite is 95% or higher, the crystal grain diameter of the austenite is 20 to 200 µm, and the carbide coverage at crystal grain boundaries of the austenite is 50% or lower. In the steel material of Patent Literature 2, to prevent carbide formed at crystal grain boundaries from constituting a starting point of a fracture or a path of propagation of a crack, the austenite grain diameter is controlled to an appropriate size, the amounts and balance of alloy elements to be added and further the amount of S and the amount of O are appropriately adjusted, and Mg, Ca, REM are added. It is mentioned that this makes it possible to appropriately adjust the austenite grain diameter as well as inhibit growth in diameter of crystal grains in a weld heat-affected zone.

Patent Literature 3 discloses "thick steel sheet for low-temperature applications." This thick steel sheet contains, in mass%, C: 0.30 to 0.65%, Si: 0.05 to 0.30%, Mn: more than 20.00% and less than 30.00%, Ni: 0.10% or more and less than 3.00%, Cr: 3.00% or more and less than 8.00%, and Al: 0.005 to 0.100%. In addition, this steel sheet contains N: 0.0050% or more and less than 0.0500%, while P, S, and O are restricted to 0.0040% or less, 0.020% or less, and 0.0050% or less, respectively, and the balance is composed of Fe and impurities. Further, an Mn segregation ratio XMn (XMn = Mn1 / MnO) calculated from an Mn concentration Mn1 at an Mn-rich portion and an Mn concentration MnO at an Mn-lean portion is 1.6 or lower. The yield stress at room temperature (25°C) is 400 MPa or higher, the tensile stress is 800 MPa or higher, and the Charpy impact absorbing energy (ᵥE₋₁₉₆) in a weld heat-affected zone is 70 J or higher. It is described in Patent Literature 3 that the technology described therein can provide a steel sheet that, as-hot-rolled, serves as a material for containers (tanks) for transporting or holding LNG.

Generally, design stress based on the strength property of base metal or a weld metal part is used in designing a welded structure. Many welded structures, including LNG tanks, have recently been on a trend toward upsizing, which makes it necessary to increase the strength of joints.

However, studies conducted by the present inventors revealed a problem that even when the TIG welding method described in Patent Literature 1 was applied to welding of pieces of the high-Mn steel material described in Patent Literature 2 or 3, hot cracking could occur if the weld metal had high strength. When it is necessary to increase the strength of the weld metal, the components of the base metal or the welding material need to be changed, and thus it is difficult to achieve an increase in the strength of the weld metal by the welding method alone.

As a solution, the present inventors developed a TIG welded joint for high-Mn steel, as disclosed in Patent Literature 4, that is intended for high-Mn steel and that can inhibit formation of hot cracks during welding and has high strength as well as excellent cryogenic impact toughness.

### Citation List

### Patent Literature

Patent Literature 1: International Publication No. WO 2013/005570
Patent Literature 2: JP-A-2016-196703
Patent Literature 3: JP-A-2017-071817
Patent Literature 4: International Publication No. WO 2022/186097

### Summary of Invention

### Technical Problem

As mentioned above, generally, design stress based on the strength property of base metal or a weld metal part is used in designing a welded structure. However, many welded structures, including LNG tanks, have recently been on a trend toward increasingly growing in size, which makes it desirable to further increase the strength of joints. Under these circumstances, to respond to the recent demand for even higher strength and enhanced hot cracking resistance, the present inventors explored further improvement of the gas tungsten arc welding method for high-Mn steel.

The present invention aims to provide, as a welded joint for high-Mn steel to be used in cryogenic environments, a gas tungsten arc-welded joint that can achieve further improvement of the strength of the weld metal and enhanced inhibition of formation of hot cracks, and a production method thereof.

### Solution to Problem

To achieve the above object, the present inventors vigorously conducted studies first on factors influencing hot cracking during TIG welding of high-Mn steel. As a result, the present inventors obtained the fact that factors causing hot cracking included segregation of an impurity element to a finally solidified part of weld metal. Moreover, the present inventors found that the segregation of an impurity element became noticeable when the temperature range from the start of solidification to the completion of solidification during solidification of the weld metal is wide. In addition, the present inventors found that in the case where the weld metal reached a high temperature equal to or above a solidus line and liquefied due to the influence of welding heat of the next and subsequent welding passes, the segregation became noticeable when the temperature range from the start of re-solidification to the completion of re-solidification (hereinafter also referred to as "solid-liquid coexisting temperature range") is wide.

Next, the present inventors conducted studies on a weld metal composition required for a welded joint produced by TIG welding in accordance with the specifications of JIS Z 3121: 2013 to have desired high strength. As a result, the present inventors obtained the fact that when N was contained in the weld metal composition of high-Mn steel, the strength of the weld metal and the welded joint improved owing to solid-solution strengthening. Further, the present inventors found that increasing the content of N in the weld metal to a range of 0.0400 to 0.4000 mass% had a narrowing effect on the solid-liquid coexisting temperature range, and that N in the weld metal composition was an additive element for inhibiting formation of hot cracks in high-Mn steel.

Since N is a stable element as a gas that turns into an N₂ molecule at normal temperature and normal pressure, a shielding gas containing 0.5 to 10.0 vol% nitrogen gas (hereinafter also referred to simply as "N₂ gas"), with the balance being composed of an inert gas and unavoidable impurities was used during TIG welding. The present inventors obtained the fact that thereby N could be stably dissolved in the weld metal as a solid solution within a range of 0.0400 to 0.4000 mass%.

The present inventors further found that N could be stably dissolved in the weld metal as a solid solution also from N in a filler metal, instead of from the nitrogen gas contained in the shielding gas, by setting the content of N in the filler metal to 0.400 mass% or less.

The present invention has been completed after further studies were additionally conducted based on these insights.

Specifically, the present invention is summarized as follows:
[1] A gas tungsten arc-welded joint of pieces of a steel material, produced using a shielding gas and a filler metal, wherein:
   the steel material is austenitic steel with a high Mn content;
   a chemical composition of the steel material includes, in mass%,
      C: 0.10 to 0.70%,
      Si: 0.05 to 1.00%,
      Mn: 18.0 to 30.0%,
      P: 0.030% or less,
      S: 0.007% or less,
      Al: 0.010 to 0.070%,
      Cr: 2.5 to 7.0%,
      N: 0.0050 to 0.0500%, and
      O (oxygen): 0.0050% or less, and
   includes, optionally and selectively, at least one type selected from
      Mo: 0.01 to 2.00%,
      V: 0.01 to 2.00%,
      W: 0.01 to 2.00%,
      Ni: 0.01 to 4.00%,
      REM: 0.0010 to 0.0200%, and
      B: 0.0005 to 0.0020%,
   with the balance being composed of Fe and unavoidable impurities; and
   a chemical composition of weld metal includes, in mass%,
      C: 0.15 to 0.80%,
      Si: 0.10 to 1.00%,
      Mn: 17.0 to 30.0%,
      P: 0.030% or less,
      S: 0.030% or less,
      Al: 0.005 to 0.100%,
      Cr: 0.4 to 5.5%,
      Mo: 0.01 to 3.50%,
      Ni: 0.01 to 10.00%, and
      N: 0.0400 to 0.4000%, and
   includes, optionally and selectively, at least one type selected from
      V: 0.01 to 1.00%,
      Ti: 0.010 to 1.000%,
      Nb: 0.010 to 1.000%,
      W: 0.01 to 1.00%,
      Cu: 0.01 to 1.00%, and
      B: 0.0010% or less,
   with the balance being composed of Fe and unavoidable impurities.
[2] The gas tungsten arc-welded joint according to [1] described above, wherein the weld metal has yield stress (0.2% proof stress) of 400 MPa or higher, tensile strength of 600 MPa or higher, and Charpy impact absorbing energy (ᵥE₋₁₉₆) of 28 J or higher.
[3] A production method of a gas tungsten arc-welded joint that forms weld metal having the chemical composition according to [1] described above between pieces of a steel material having the chemical composition according to [1] described above by using a shielding gas and a filler metal, wherein
   the shielding gas contains a nitrogen gas within a range of 0.5 to 10.0% in vol%, with the balance being composed of an inert gas and unavoidable impurities.
[4] The production method of a gas tungsten arc-welded joint according to [3] described above, wherein a content of N in the filler metal is 0.1200% or less in mass%.
[5] A production method of a gas tungsten arc-welded joint that forms weld metal having the chemical composition according to [1] described above, between pieces of a steel material having the chemical composition according to [1] described above using a shielding gas and a filler metal, wherein
   the shielding gas contains less than 0.5% nitrogen gas in vol%, with the balance being composed of an inert gas and unavoidable impurities, and
   a content of N in the filler metal is 0.4000% or less in mass%.
[6] The production method of a gas tungsten arc-welded joint according to any one of [3] to [5] described above, wherein the weld metal is formed so as to have yield stress (0.2% proof stress) of 400 MPa or higher, tensile strength of 600 MPa or higher, and Charpy impact absorbing energy (ᵥE₋₁₉₆) of 28 J or higher.

### Advantageous Effects of Invention

The present invention offers remarkable industrial advantages by being able to easily manufacture a welded joint that can achieve further improvement of the strength of the weld metal and enhanced inhibition of the formation of hot cracks as a welded joint for high-Mn steel to be used in cryogenic environments.

### Brief Description of Drawings

[Fig. 1] is a schematic view showing one example of the shape of a groove in a TIG welded joint of the present invention.
[Fig. 2] is a schematic view showing one example of a sampling position of a test specimen for a Charpy impact test.
[Fig. 3] is a graph showing changes in 0.2% proof stress relative to the content of N in weld metal according to changes in the content of nitrogen gas.
[Fig. 4] is a graph showing changes in tensile strength relative to the content of N in the weld metal according to changes in the content of the nitrogen gas.
[Fig. 5] is a graph showing changes in 0.2% proof stress relative to the content of N in the weld metal according to changes in the content of N in a filler metal.
[Fig. 6] is a graph showing changes in tensile strength relative to the content of N in the weld metal according to changes in the content of N in the filler metal.

### Description of Embodiment

One embodiment of the present invention is a TIG welded joint that is a welded joint for high-Mn steel to be used in cryogenic environments, and that can achieve further improvement of the strength of the weld metal and enhanced inhibition of formation of hot cracks. Specifically, the welded joint of the embodiment is a welded joint produced by TIG welding in accordance with the specifications of JIS Z 3001-7: 2018 (except for the type of the shielding gas). Compared with an ordinary TIG welded joint for which an inert gas is used for 99.5% or more of the shielding gas, the weld metal produced in accordance with the specifications of JIS Z 3111: 2005 is improved in the yield stress (0.2% proof stress) and the tensile strength at room temperature (25°C) in a tensile test by 10 MPa or more on average. Further, in a Charpy impact test at a test temperature of -196°C of the weld metal of the welded joint produced in accordance with the specifications of JIS Z 3128: 2017, the weld metal exhibits absorbing energy (hereinafter also referred to as "ᵥE₋₁₉₆") of 28 J or higher. Thus, the welded joint has excellent cryogenic impact toughness and furthermore is unlikely to develop hot cracks.

### [Gas Tungsten Arc Welding (TIG Welding)]

As described above, TIG welding is a method that, using tungsten as an electrode rod, produces a weld by melting a filler metal in an arc as necessary while blocking air by spraying typically an inert gas, such as an argon gas or a helium gas, as a shielding gas. TIG welding is applied to welding of all kinds of metals, as it can be applied to various alloy steels, non-ferrous metals, etc. and can further weld together pieces of complicated shapes and achieve excellent weld quality. Specific welding conditions will be described later.

### [High-Mn Steel (Austenitic Steel with High Mn Content)]

First, a steel material constituting a base metal will be described. The steel material to be used may be any austenitic steel with a high Mn content that has a chemical composition to be described later. In the present invention, high Mn content of the austenitic steel with a high Mn content means that the content of Mn in the steel material composition is 18.0 to 30.0% in mass%. Austenitic steel of the austenitic steel with a high Mn content means a steel material of which the matrix phase (metallographic structure) is an austenite phase.

That is, when the crystal structure of the steel material is a body-centered cubic structure (bec), the steel material may develop a brittle fracture in a low-temperature environment. Therefore, it makes it unsuitable for use in a low-temperature environment. Here, when use in a low-temperature environment is assumed, it is essential that the crystal structure of the matrix phase of the metallographic structure of the steel material is an austenite structure with a face-centered cubic structure (fcc). That "the matrix phase is an austenite phase" means that the austenite phase accounts for 90% or more as an area ratio. The balance other than the austenite phase is a ferrite phase or a martensite phase, or precipitates, such as carbide. The austenite phase accounts for more preferably 95% or more, and even more preferably 100%.

### [Basic Composition of Steel Material]

Here, the chemical composition of the steel material according to the embodiment will be described next. In this description, unless otherwise noted, "%" for "chemical composition" means "mass%."

The steel material used in the embodiment is the above-described high-Mn steel material containing 18.0 to 30.0% Mn, and the other components of the basic composition are as follows. C: 0.10 to 0.70%, Si: 0.05 to 1.00%, P: 0.030% or less, S: 0.007% or less, Al: 0.010 to 0.070%, Cr: 2.5 to 7.0%, N: 0.0050 to 0.0500%, and O (oxygen): 0.0050% or less. The balance of the chemical composition of this high-Mn steel is composed of Fe, optionally selected components, and unavoidable impurities. Reasons for restricting the chemical composition are as follows.

### [C: 0.10 to 0.70%]

C is an inexpensive and important element that has an action of stabilizing the austenite phase and improving the cryogenic impact toughness. To obtain this effect, the content of C should be 0.10% or more. The content of C is preferably 0.20% or more, more preferably 0.25% or more, even more preferably 0.30% or more, and most preferably 0.35% or more. On the other hand, if more than 0.70% C is contained, Cr carbide is excessively formed, which degrades the cryogenic impact toughness. Therefore, the content of C should be 0.70% or less. The content of C is preferably 0.65% or less, more preferably 0.63% or less, even more preferably 0.61% or less, and most preferably 0.60% or less.

### [Si: 0.05 to 1.00%]

Si is an element that acts as a deoxidizer, and dissolves in the steel as a solid solution and contributes to increasing the strength of the steel material through solid-solution strengthening. To obtain this effect, the content of Si should be 0.05% or more. The content of Si is preferably 0.07% or more, more preferably 0.10% or more, even more preferably 0.15%, and most preferably 0.20% or more. On the other hand, if more than 1.00% Si is contained, the weldability degrades. Therefore, the content of Si should be 1.00% or less. The content of Si is preferably 0.80% or less, more preferably 0.70% or less, even more preferably 0.65% or less, and most preferably 0.60% or less.

### [Mn: 18.0 to 30.0%]

Mn is a relatively inexpensive element having an action of stabilizing the austenite phase, and is an important element for achieving both high strength and excellent cryogenic impact toughness at the same time. Obtaining this effect requires 18.0% or more Mn to be contained. Therefore, the content of Mn should be 18.0% or more. The content of Mn is preferably 20.0% or more, more preferably 22.0% or more, and even more preferably 24.0% or more. On the other hand, containing more than 30.0% Mn is economically disadvantageous, as the effect of improving the cryogenic impact toughness saturates and then an effect commensurate with the content cannot be expected. Moreover, containing Mn in a large amount exceeding 30.0% causes degradation of the cuttability, as well as promotes Mn segregation and formation of stress corrosion cracks. Therefore, the content of Mn should be 30.0% or less. The content of Mn is preferably 29.0% or less, more preferably 28.5% or less, and even more preferably 28.0% or less.

### [P: 0.030% or less]

P is an element that segregates at grain boundaries as impurities and forms a starting point of formation of a stress corrosion crack. In this embodiment, it is desirable that P be reduced as much as possible. Containing 0.030% or less P is allowable. Therefore, the content of P should be 0.030% or less. The content of P is preferably 0.028% or less, more preferably 0.024% or less, even more preferably 0.020% or less, and most preferably 0.015% or less. On the other hand, making the content of P as extremely low as less than 0.002% requires prolonged refining, which drives up the refining cost. From an economical viewpoint, therefore, the content of P is preferably 0.002% or more.

### [S: 0.007% or less]

S is present in the steel as a sulfide-based inclusion and degrades the ductility and the cryogenic impact toughness of the steel material and the weld metal. For this reason, it is desirable that S be reduced as much as possible. Containing 0.007% or less S is allowable. Therefore, the content of S should be 0.007% or less. The content of S is preferably 0.005% or less, and more preferably 0.004% or less. On the other hand, making S as extremely low as less than 0.0005% requires prolonged refining, which drives up the refining cost. From an economical viewpoint, therefore, the content of S is preferably 0.0005% or more.

### [Al: 0.010 to 0.070%]

Al is an element that acts as a deoxidizer and is most generally used in molten steel deoxidation process of steel materials. To obtain this effect, the content of Al should be 0.010% or more. The content of Al is preferably 0.020% or more, and more preferably 0.030% or more. On the other hand, if more than 0.070% Al is contained, the Al gets mixed into the weld metal part during welding and degrades the toughness of the weld metal. Therefore, the content of Al should be 0.070% or less. The content of Al is preferably 0.060% or less, and more preferably 0.050% or less.

### [Cr: 2.5 to 7.0%]

Cr is an element that stabilizes the austenite phase and thereby effectively contributes to improving the cryogenic impact toughness and improving the strength of the steel material. Moreover, Cr is an effective element for forming a fine crystal region. To obtain these effects, the content of Cr should be 2.5% or more. The content of Cr is preferably 3.0% or more, more preferably 3.3% or more, even more preferably 3.5% or more, and most preferably 4.0% or more. On the other hand, if more than 7.0% Cr is contained, Cr carbide forms, resulting in degradation of the cryogenic impact toughness and the resistance to stress corrosion cracking. Therefore, the content of Cr should be 7.0% or less. The content of Cr is preferably 6.8% or less, more preferably 6.5% or less, and even more preferably 6.0% or less.

### [N: 0.0050 to 0.0500%]

N is an element that has an action of stabilizing the austenite phase and effectively contributes to improving the cryogenic impact toughness. To obtain this effect, the content of N should be 0.0050% or more. The content of N is preferably 0.0060% or more, more preferably 0.0070% or more, and even more preferably 0.0080% or more. On the other hand, if more than 0.0500% N is contained, nitride or carbonitride coarsens in the production process of the steel material, resulting in degradation of the cryogenic impact toughness. Therefore, the content of N should be 0.0500% or less. The content of N is preferably 0.0450% or less, more preferably 0.0400% or less, and even more preferably 0.0350% or less.

### [O (oxygen): 0.0050% or less]

O (oxygen) is present in the steel as an oxide-based inclusion and degrades the cryogenic impact toughness of the steel material. For this reason, it is preferable that O (oxygen) be reduced as much as possible, while 0.0050% or less O (oxygen) is allowable. Therefore, the content of O (oxygen) should be 0.0050% or less. The content of O (oxygen) is preferably 0.0045% or less, and more preferably 0.0040% or less. On the other hand, making O (oxygen) as extremely low as less than 0.0005% requires prolonged refining, which drives up the refining cost. From an economical viewpoint, therefore, O (oxygen) is preferably 0.0005% or more. O (oxygen) is more preferably 0.0006% or more.

### [Optionally Selected Components of Steel Material]

While the above-described chemical composition is the preferable basic composition of the high-Mn steel, optionally selected components that may be contained as necessary in addition to these basic composition will be shown next. They are at least one type among Mo: 0.01 to 2.00%, V: 0.01 to 2.00%, W: 0.01 to 2.00%, Ni: 0.01 to 4.00%, REM: 0.0010 to 0.0200%, and B: 0.0005 to 0.0020%. Reasons for restricting the respective components are as follows.

### [Mo, V, and W: 0.01 to 2.00%]

Mo, V, and W are all elements that contribute to stabilizing the austenite phase as well as to improving the strength of the steel material and improving the cryogenic impact toughness, and at least one type thereof can be selected and contained as necessary. To obtain these effects, it is preferable that the content of each of Mo, V, and W be 0.01% or more. On the other hand, if the content of each of Mo, V, and W is more than 2.00%, coarse carbonitride increases and forms a starting point of a fracture, which degrades the cryogenic impact toughness. Therefore, when containing Mo, V, and W, it is preferable that the content be 2.00% or less. Each of the contents of Mo, V, and W is more preferably 1.70% or less, and even more preferably 1.50% or less.

### [Ni: 0.01 to 4.00%]

Ni is an element that contributes to stabilizing the austenite phase and strengthens the austenite grain boundaries, and is an element that contributes also to improving the cryogenic impact toughness of the steel material. To obtain these effects, the content of Ni is preferably 0.01% or more. The content of Ni is more preferably 0.10% or more, and even more preferably 0.20% or more. On the other hand, as Ni is an expensive element, containing more than 4.00% Ni is economically disadvantageous. Therefore, the content of Ni is preferably 4.00% or less. The content of Ni is more preferably 3.75% or less, and even more preferably 3.50% or less.

### [REM: 0.0010 to 0.0200%]

REM is a rare earth element such as Sc, Y, La, or Ce, and is an element having an action of improving the toughness and further the ductility and the resistance to sulfide stress corrosion cracking of the steel material through control of the form of inclusions. To obtain these effects, the content of REM is preferably 0.0010% or more. The content of REM is more preferably 0.0015% or more. On the other hand, if more than 0.0200% REM is contained, non-metallic inclusions increase, which may degrade the toughness and further the ductility and the resistance to sulfide stress cracking. Therefore, the content of REM is preferably 0.0200% or less. The content of REM is more preferably 0.0180% or less.

### [B: 0.0005 to 0.0020%]

B is an element that has an action of segregating at grain boundaries and contributing to improving the toughness of the steel material. To obtain this effect, the content of B is preferably 0.0005% or more. The content of B is more preferably 0.0008% or more. On the other hand, if more than 0.0020% B is contained, coarse nitride and carbide increase, which may degrade the toughness. Therefore, the content of B is preferably 0.0020% or less. The content of B is more preferably 0.0018% or less.

### [Composition of Balance of Steel Material]

The balance of the above-described chemical composition is composed of Fe and unavoidable impurities. As the unavoidable impurities, Ca, Mg, Ti, Nb, and Cu can be named as examples, and a total of 0.05% or less unavoidable impurities is allowable. An element of the optionally selected components, when contained at a ratio lower than the lower limit, does not influence the properties of the high-Mn steel and is therefore allowable as an unavoidable impurity. As long as the above-described basic composition and optionally selected components are satisfied and the properties of the high-Mn steel are not influenced, elements other than these unavoidable impurities may be contained, and such a form of implementation is also included in the technical scope of the present invention.

### [Production method of High-Mn Steel]

Further, a preferable production method of the high-Mn steel to be used in the embodiment will be described. The production method is not restricted to the one to be described below, and any other production methods that can produce equivalent high-Mn steel can be adopted.

Molten steel having the above-described steel material composition is smelted by a common smelting method using a converter, an electric furnace, etc. and turned into steel stock, such as slab, of predetermined dimensions by a common casting method, such as a continuous casting method or an ingot making-blooming method. In smelting, secondary refining using a vacuum degassing furnace, etc. may be performed.

The obtained steel stock is turned into a steel material of predetermined dimensions, as-cast or by being further heated and subjected to hot rolling followed by cooling. A steel material with excellent cryogenic impact toughness can be obtained by heating the steel stock at a temperature within a range of 1100 to 1300°C, ending the hot rolling at a finish-rolling end temperature of 790 to 980°C, and immediately performing cooling etc. To adjust the steel material properties, a heat treatment, such as an annealing treatment, may be further performed.

Preferable mechanical properties of the high-Mn steel used in the embodiment will be described. It is preferable that a high-strength steel material for cryogenic applications having the above-described steel material composition have a sheet thickness of, for example, 5 to 102 mm, yield stress (0.2% proof stress) YS of 400 MPa or higher, and Charpy impact absorbing energy (ᵥE₋₁₉₆) of 28 J or higher. Further, the tensile strength TS is preferably 660 MPa or higher. The tensile strength TS is more preferably 800 MPa or higher.

### [Basic Composition of Weld Metal]

In the embodiment, the welded joint is created by forming a weld metal part, composed of one layer or multiple layers of weld metal, between pieces of the above-described high-Mn steel by TIG welding. The chemical composition of this weld metal part consists (up to about 50%) of a mixture of components of a filler metal and components of the base metal of the high-Mn steel.

The basic composition of the weld metal according to the embodiment is as follows. The weld metal has a chemical composition including C: 0.15 to 0.80%, Si: 0.10 to 1.00%, Mn: 17.0 to 30.0%, P: 0.030% or less, S: 0.030% or less, Al: 0.005 to 0.100%, Cr: 0.4 to 5.5%, Mo: 0.01 to 3.50%, Ni: 0.01 to 10.00%, and N: 0.0400 to 0.4000%, with the balance being composed of Fe, optionally selected components, and unavoidable impurities. Reasons for restricting the chemical composition are as follows.

### [C: 0.15 to 0.80%]

C is an element that has an action of enhancing the strength of the weld metal through solid-solution strengthening. Moreover, C stabilizes the austenite phase and improves the cryogenic impact toughness of the weld metal. Obtaining these effects requires 0.15% or more C to be contained. Therefore, the content of C should be 0.15% or more. The content of C is preferably 0.20% or more, more preferably 0.25% or more, and even more preferably 0.28% or more. On the other hand, if more than 0.80% C is contained, carbide precipitates and the cryogenic impact toughness degrades, and further hot cracking becomes more likely to occur during welding. Therefore, the content of C should be 0.80% or less. The content of C is preferably 0.75% or less, more preferably 0.70% or less, even more preferably 0.65% or less, and most preferably 0.63% or less.

### [Si: 0.10 to 1.00%]

Si acts as a deoxidizer to produce effects of increasing the yield of Mn as well as increasing the viscosity of the molten metal to stably retain the shape of beads. Obtaining these effects requires 0.10% or more Si to be contained. Therefore, the content of Si should be 0.10% or more. The content of Si is preferably 0.15% or more, more preferably 0.20% or more, even more preferably 0.25% or more, and most preferably 0.28% or more. On the other hand, if more than 1.00% Si is contained, the cryogenic impact toughness of the weld metal degrades. Moreover, Si segregates during solidification and causes a liquid phase to form at a solidified cell interface, thereby degrading the hot cracking resistance. Therefore, the content of Si should be 1.00% or less. The content of Si is preferably 0.80% or less, more preferably 0.75% or less, and even more preferably 0.70% or less.

### [Mn: 17.0 to 30.0%]

Mn is an element that inexpensively stabilizes the austenite phase, and 17.0% or more Mn need be contained in the embodiment. If Mn is less than 17.0%, a ferrite phase forms in the weld metal, which significantly degrades the cryogenic impact toughness. Therefore, the content of Mn should be 17.0% or more. The content of Mn is preferably 18.0% or more, and more preferably 19.0% or more. On the other hand, if Mn exceeds 30.0%, excessive segregation of Mn occurs during solidification, which induces hot cracking. Therefore, the content of Mn should be 30.0% or less. The content of Mn is preferably 28.0% or less, and more preferably 27.0% or less.

### [P: 0.030% or less]

P is an element that segregates at crystal grain boundaries and induces hot cracking. In the embodiment, it is preferable that P be reduced as much as possible, while 0.030% or less P is allowable. Therefore, the content of P should be 0.030% or less. The content of P is preferably 0.020% or less, more preferably 0.018% or less, even more preferably 0.016% or less, and most preferably 0.014% or less. Extremely reducing P drives up the refining cost. Therefore, the content of P is preferably adjusted to 0.002% or more.

### [S: 0.030% or less]

S is present in the weld metal as a sulfide-based inclusion MnS. MnS forms a starting point of formation of a fracture and thus degrades the cryogenic impact toughness. Therefore, the content of S should be 0.030% or less. The content of S is preferably 0.025% or less, more preferably 0.020% or less, and even more preferably 0.017% or less. Extremely reducing S drives up the refining cost. Therefore, the content of S is preferably adjusted to 0.001% or more.

### [Al: 0.005 to 0.100%]

Al acts as a deoxidizer and has an important action of increasing the viscosity of the molten metal and stably retaining the shape of beads. Moreover, Al narrows the temperature range of the solid-liquid coexisting region of the molten metal and thereby contributes to inhibiting the formation of hot cracks in the weld metal. As these effects become noticeable when 0.005% or more Al is contained, the content of Al should be 0.005% or more. The content of Al is preferably 0.010% or more, and more preferably 0.015% or more. On the other hand, if more than 0.100% Al is contained, the viscosity of the molten metal becomes so high that conversely defects, such as incomplete fusion, increase as beads fail to spread. Therefore, the content of Al should be 0.100% or less. The content of Al is preferably 0.060% or less, more preferably 0.050% or less, and even more preferably 0.040% or less.

### [Cr: 0.4 to 5.5%]

Cr works as an element that stabilizes the austenite phase at cryogenic temperatures, and has an effect of improving the cryogenic fracture toughness of the weld metal. Moreover, Cr has an effect of improving the strength of the weld metal, an effect of raising the liquidus-line temperature of the weld metal to prevent hot cracking of the weld metal during implementation of welding, and an effect of improving the corrosion resistance of the weld metal. If the content of Cr is too low, these effects cannot be obtained. Exhibiting these effects requires 0.4% or more Cr to be contained. The content of Cr is preferably 0.6% or more, and more preferably 0.8% or more. On the other hand, if the content of Cr is too high, Cr carbide precipitates in the weld metal, which degrades the cryogenic fracture toughness of the weld metal. Therefore, the content of Cr need be 5.5% or less. The content of Cr is preferably 5.0% or less, and more preferably 4.5% or less.

### [Mo: 0.01 to 3.50%]

Mo is an element that strengthens the austenite grain boundaries, and segregates at the grain boundaries to improve the strength of the weld metal. Moreover, Mo has an action of improving the strength of the weld metal through solid-solution strengthening. Exhibiting these effects requires setting the content of Mo to 0.01% or more. The content of Mo is preferably 0.30% or more, more preferably 0.50% or more, and even more preferably 1.00% or more. On the other hand, if more than 3.50% Mo is contained, Mo precipitates as carbide and forms a starting point of formation of a fracture, thereby degrading the cryogenic impact toughness. Therefore, the content of Mo should be 3.50% or less. The content of Mo is preferably 3.20% or less, more preferably 3.00% or less, and even more preferably 2.50% or less.

### [Ni: 0.01 to 10.00%]

Ni is an element that strengthens the austenite grain boundaries, and segregates at the grain boundaries to improve the cryogenic impact toughness. Moreover, Ni has an effect of stabilizing the austenite phase. Thus, further increasing the content stabilizes the austenite phase and improves the cryogenic impact toughness of the weld metal. Exhibiting this effect requires the content of Ni to be 0.01% or more. The content of Ni is preferably 0.02% or more, more preferably 0.05% or more, and even more preferably 1.00% or more. On the other hand, as Ni is an expensive element, containing more than 10.00% Ni is economically disadvantageous. Therefore, the content of Ni should be 10.00% or less. The content of Ni is preferably 8.00% or less, more preferably 7.00% or less, even more preferably 6.50% or less, and most preferably 6.00% or less.

### [N: 0.0400 to 0.4000%]

While N is an element that unavoidably gets mixed in, N is intentionally mixed in in the embodiment. Like C, N effectively contributes to improving the strength of the weld metal, as well as contributes to stably improving the cryogenic impact toughness by stabilizing the austenite phase. Further, N is an additive element that has an effect of narrowing the solid-liquid coexisting temperature range when contained in an increased amount, and thus inhibits formation of hot cracks during welding of the high-Mn steel. These effects become noticeable when 0.0400% or more N is contained. Therefore, the content of N should be 0.0400% or more. The content of N is preferably 0.0500% or more, more preferably 0.0800% or more, and even more preferably 0.1000% or more. On the other hand, if more than 0.4000% N is contained, nitride forms and the low-temperature toughness degrades, and the amount of solid-solution N becomes so large as to cause weld defects, such as blowholes and pits. Therefore, N should be 0.4000% or less. N is preferably 0.3500% or less, and more preferably 0.3000% or less.

As will be described later, possible methods for adding N into the weld metal include a method of adding N by mixing a nitrogen gas in the shielding gas for gas tungsten arc welding and a method of adding N by increasing the content of N in the filler metal that is the welding material.

### [Optionally Selected Components of Weld Metal]

While the above-described composition is the basic chemical composition of the weld metal of the embodiment, in addition to the basic chemical composition, at least one type selected from the following can be further selected and contained as necessary as optionally selected components: V: 0.01 to 1.00%, Ti: 0.010 to 1.000%, Nb: 0.010 to 1.000%, W: 0.01 to 1.00%, Cu: 0.01 to 1.00%, and B: 0.0010% or less. Reasons for restricting the respective components are as follows.

### [V: 0.01 to 1.00%]

V is a carbide forming element, and contributes to improving the strength of the weld metal by causing fine carbide to precipitate. To obtain this effect, when V is contained, the content is preferably 0.01% or more. The content of V is more preferably 0.02% or more. On the other hand, if more than 1.00% V is contained, carbide coarsens and forms a starting point of formation of a fracture, which degrades the cryogenic impact toughness. Therefore, when V is contained, the content is preferably 1.00% or less. The content of V is more preferably 0.80% or less, and even more preferably 0.60% or less.

### [Ti: 0.010 to 1.000%]

Ti is a carbide forming element, and contributes to improving the strength of the weld metal by causing fine carbide to precipitate. Moreover, Ti contributes to inhibiting formation of hot cracks by causing carbide to precipitate at a solidified cell interface of the weld metal. To obtain these effects, 0.010% or more Ti is preferably contained. The content of Ti is more preferably 0.015% or more. On the other hand, if more than 1.000% Ti is contained, carbide coarsens and forms a starting point of formation of a fracture, thereby degrading the cryogenic impact toughness. Therefore, the content of Ti is preferably 1.000% or less. The content of Ti is more preferably 0.800% or less, and even more preferably 0.600% or less.

### [Nb: 0.010 to 1.000%]

Nb is a carbide forming element, and contributes to improving the strength of the weld metal by causing carbide to precipitate. Moreover, Nb contributes to inhibiting formation of hot cracks by causing carbide to precipitate at a solidified cell interface of the weld metal. To obtain these effects, 0.010% or more Nb is preferably contained. Nb is more preferably 0.015% or more. On the other hand, if Nb exceeds 1.000%, carbide coarsens and forms a starting point of formation of a fracture, thereby degrading the cryogenic impact toughness. Therefore, the content of Nb is preferably 1.000% or less. The content of Nb is more preferably 0.800% or less, even more preferably 0.700% or less, and most preferably 0.600% or less.

### [W: 0.01 to 1.00%]

W is a carbide forming element, and is an element that contributes to improving the strength of the weld metal by causing carbide to precipitate. Moreover, W contributes to stabilizing the austenite phase and improves the cryogenic impact toughness. In addition, W contributes to inhibiting formation of hot cracks by causing carbide to precipitate at a solidified cell interface of the weld metal. To obtain these effects, 0.01% or more W is preferably contained. The content of W is more preferably 0.02% or more, and even more preferably 0.05% or more. On the other hand, if W exceeds 1.00%, carbide coarsens and forms a starting point of formation of a fracture, thereby degrading the cryogenic impact toughness. Therefore, the content of W is preferably 1.00% or less. The content of W is more preferably 0.80% or less, and even more preferably 0.60% or less.

### [Cu: 0.01 to 1.00%]

Cu is an element that stabilizes the austenite phase, and even at cryogenic temperatures, stabilizes the austenite phase and improves the cryogenic impact toughness of the weld metal. To obtain this effect, the content of Cu is preferably 0.01% or more. The content of Cu is more preferably 0.04% or more. On the other hand, if Cu is contained in a large amount exceeding 1.00%, Cu segregates during solidification and induces hot cracking during welding. Therefore, the content of Cu is preferably 1.00% or less. The content of Cu is more preferably 0.80% or less.

### [B: 0.0010% or less]

B is an element that has an action of segregating at grain boundaries and contributing to improving the toughness of the steel material. However, if more than 0.0010% B is contained, coarse nitride and carbide increase, which degrades the toughness. Therefore, the content of B is preferably 0.0010% or less. The content of B is more preferably 0.0008% or less, and even more preferably 0.0007% or less.

### [Composition of Balance of Weld Metal]

The balance of the above-described chemical composition is composed of Fe and unavoidable impurities. As the unavoidable impurities, H, O, Mg, Ca, Zn, Re, REM, etc. can be named as examples, and a total of 0.0100% or less unavoidable impurities is allowable. Each optionally selected component, when present below its specified lower limit, does not affect the properties of the weld metal and is therefore considered an allowable unavoidable impurity. As long as the above-described basic composition and optionally selected components are satisfied and the properties of the weld metal are not influenced, elements other than these unavoidable impurities may be contained, and such a form of implementation is also included in the technical scope of the present invention.

The chemical composition of the weld metal is mainly determined by the ratio of inflow of the base metal and the welding material, such as the filler metal for TIG welding.

### [Welding Method, Welding Conditions]

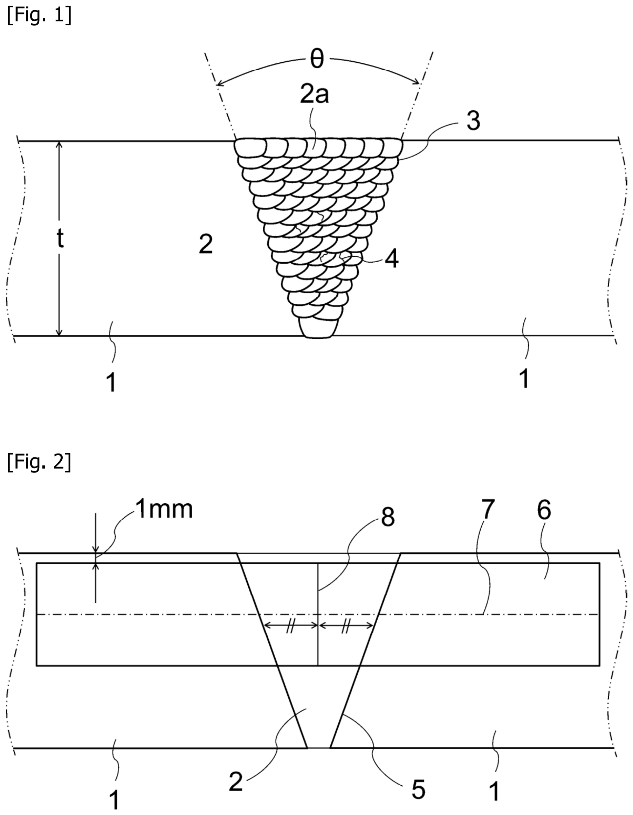

Next, a specific example relating to a preferable TIG welding method for producing the welded joint according to the embodiment will be described. One form of implementation thereof is shown in Fig. 1. A sheet thickness t of a steel material constituting a base metal 1 is 5 to 102 mm.

When producing a test specimen to be described later, pieces of this base metal 1 are butted so as to form a V-groove with a groove angle θ within a range of 35 to 60° in accordance with JIS Z 3111: 2005. As an electrode for TIG welding, a pure-tungsten rod and a filler metal are used, and preheating need not be performed. As the pure-tungsten rod, one with a diameter of 2.5 to 4 mm can be used. As the filler metal, a wire, a filler rod, etc. with a diameter of 1.5 to 2.5 mm can be used.

Other welding conditions are as follows: current: electrode minus within a range of 180 to 250 A (DCEN), voltage: within a range of 10 to 20 V, welding rate: 5 to 30 cm/min, and welding heat input: within a range of 7.0 to 40.0 kJ/cm. Here, a welding heat input smaller than 7.0 kJ/cm is not suitable for actual implementation, because not only are weld defects likely to occur due to an insufficient amount of deposition but also the efficiency is low. On the other hand, if the welding heat input exceeds 40.0 kJ/cm, the efficiency decreases as consumption of the electrode accelerates and the frequency of replacement increases, or weld defects are likely to occur as the stability of the arc decreases. The welding heat input is more preferably 8.0 to 30.0 kJ/cm, and even more preferably 8.0 to 25.0 kJ/cm. The inter-pass temperature should be 100 to 150°C.

As the welding position, downward, horizontal, overhead, vertically upward, etc. can be named as examples. The shape of the groove may be, other than the V-groove shown in Fig. 1, a single bevel groove, a double bevel groove, a double V groove, etc. The groove angle θ is preferably 35 to 60° as described above, and more preferably 40 to 55°.

Under the above-described welding conditions, a weld metal 2 is formed inside the V-groove by single-layer or multi-layer welding, and the weld metal 2 has a form in which weld metal layers 2a overlap one another in multiple layers. When departure is made from the welding method, i.e., the above-described welding conditions, of the embodiment, weld defects, such as solidification cracks 4, occur in some of the weld metal layers 2a. On the other hand, the welding method of the embodiment is unlikely to cause weld defects such as the solidification cracks 4.

### [Shielding Gas]

In this embodiment, it is preferable that in addition to ordinary TIG welding, as the shielding gas for TIG welding, a shielding gas for arc welding be used that contains 0.5 to 10.0% nitrogen (N₂) gas on a volume basis, with the balance being composed of an inert gas and unavoidable impurities. Hereinafter, "%" for the content of a gas component means "vol%."

Here, "inert gas" that is used as the shielding gas in the embodiment means an argon (Ar) gas, a helium (He) gas, or a mixed gas of these. The content of this inert gas is preferably within a range of 90.0 to 99.5%. The content of this inert gas is more preferably within a range of 93.0 to 99.5%, even more preferably 93.0 to 98.0%, and most preferably 95.0 to 98.0%.

The unavoidable impurities refer to other gases than the nitrogen gas and the above-described inert gas, and an oxygen (O₂) gas, a hydrogen (H₂) gas, a carbon dioxide (CO₂) gas, etc. can be named as examples.

N is an element that, when dissolved in the weld metal of high-Mn steel as a solid solution, improves the strength of the weld metal and the welded joint through solid-solution strengthening. Further, increasing the content of N in the weld metal tends to narrow the solid-liquid coexisting temperature range, thereby improving the susceptibility to hot cracking. Obtaining these effects requires 0.5% or more nitrogen (N₂) to be contained in the shielding gas. Therefore, the content of nitrogen in the shielding gas should be 0.5% or more. The content of nitrogen is preferably 0.8% or more, and more preferably 1.0% or more. On the other hand, if 10.0% or more nitrogen is contained in the shielding gas, the arc becomes unstable and weld defects, such as blowholes and pits, occur. Therefore, the content of nitrogen in the shielding gas should be 10.0% or less. The content of nitrogen in the shielding gas is preferably 8.0% or less, more preferably 6.0% or less, even more preferably 5.0% or less, and most preferably 4.5% or less.

As has been described above, when a shielding gas that contains 0.5 to 10.0% nitrogen gas on a volume basis, with the balance being composed of an inert gas and unavoidable impurities is used, the content of N in the weld metal of high-Mn steel becomes 0.0400 to 0.4000%. Thus, N dissolves in the weld metal as a solid solution, which can improve the strength of the weld metal and the welded joint.

The gas flow rate of the shielding gas is preferably within a range of 10 to 30 L/min, and more preferably within a range of 15 to 25 L/min.

### [Basic Composition of Filler Metal]

The welding method of the embodiment creates a welded joint by forming a weld metal part, composed of a single layer or multiple layers of weld metal, between pieces of the above-described high-Mn steel by TIG welding. Preferable chemical composition of the filler metal to be used in this case will be shown below. Hereinafter, "%" for "chemical composition" of the filler metal means "mass%."

Preferable basic composition of the filler metal to be used in the embodiment is as follows: C: 0.20 to 0.80%, Si: 0.15 to 1.00%, Mn: 17.0 to 30.0%, P: 0.030% or less, S: 0.030% or less, Ni: 0.01 to 10.00%, Cr: 0.4 to 4.0%, and Mo: 0.01 to 3.50%. The composition of the filler metal further includes B: 0.0010% or less and N: 0.4000% or less, with the balance being composed of Fe, optionally selected components, and unavoidable impurities. Reasons for restricting the respective components are as follows.

### [C: 0.20 to 0.80%]

C is an element that has an action of enhancing the strength of the weld metal through solid-solution strengthening, and moreover, C is an inexpensive and important element that has an action of stabilizing the austenite phase to improve the cryogenic impact toughness of the weld metal. To obtain these effects, the content of C is preferably 0.20% or more. The content of C is more preferably 0.25% or more, and even more preferably 0.28% or more. On the other hand, if more than 0.80% C is contained, carbide forms excessively in the weld metal, which may degrade the cryogenic impact toughness and further increase the likelihood of hot cracking during welding. Therefore, the content of C is preferably 0.80% or less. The content of C is more preferably 0.75% or less, even more preferably 0.70% or less, and most preferably 0.63% or less.

### [Si: 0.15 to 1.00%]

Si acts as a deoxidizer to produce effects of increasing the yield of Mn and increasing the viscosity of the molten metal to stably retain the shape of beads. To obtain these effects, the content of Si is preferably 0.15% or more. The content of Si is more preferably 0.18% or more, even more preferably 0.20% or more, and most preferably 0.25% or more. On the other hand, if more than 1.00% Si is contained, the Si degrades the cryogenic impact toughness of the weld metal, and Si segregates during solidification and causes a liquid phase to form at a solidified cell interface, which may degrade the hot cracking resistance. Therefore, the content of Si is preferably 1.00% or less. The content of Si is more preferably 0.80% or less, even more preferably 0.75% or less, and most preferably 0.70% or less.

### [Mn: 17.0 to 30.0%]

Mn is an element that has an action of inexpensively stabilizing the austenite phase. However, if the content of Mn is less than 17.0%, a ferrite phase forms in the weld metal, which may significantly degrade the cryogenic impact toughness. Therefore, the content of Mn is preferably 17.0% or more. The content of Mn is more preferably 18.0% or more, and even more preferably 18.5% or more. On the other hand, if the content of Mn exceeds 30.0%, the stacking fault energy increases and the resistance during deformation decreases, which may degrade the strength. Therefore, the content of Mn is preferably 30.0% or less. The content of Mn is more preferably 27.0% or less, and even more preferably 26.0% or less.

### [P: 0.030% or less]

P is an element that segregates at crystal grain boundaries and induces hot cracking. In the embodiment, it is preferable that P be reduced as much as possible, while 0.030% or less P is allowable. Therefore, the content of P is preferably 0.030% or less. The content of P is more preferably 0.020% or less, even more preferably 0.018% or less, and most preferably 0.014% or less. On the other hand, making the content of P as extremely low as less than 0.002% requires prolonged refining and drives up the refining cost. From an economical viewpoint, therefore, the content of P is preferably 0.002% or more.

### [S: 0.030% or less]

S is present in the weld metal as a sulfide-based inclusion MnS. MnS forms a starting point of formation of a fracture and may thereby degrade the cryogenic impact toughness. Therefore, the content of S is preferably 0.030% or less. The content of S is more preferably 0.025% or less, even more preferably 0.020% or less, and most preferably 0.017% or less. On the other hand, excessively reducing S drives up the refining cost. Therefore, the content of S is preferably 0.001% or more.

### [Ni: 0.01 to 10.00%]

Ni is an element that strengthens the austenite grain boundaries, and segregates at the grain boundaries to improve the cryogenic impact toughness. Moreover, Ni has an effect of stabilizing the austenite phase, and therefore further increasing the content stabilizes the austenite phase and improves the cryogenic impact toughness of the weld metal. To obtain these effects, the content of Ni is preferably 0.01% or more. The content of Ni is more preferably 1.00% or more. On the other hand, as Ni is an expensive element, containing more than 10.00% Ni is economically disadvantageous. Therefore, the content of Ni is preferably 10.00% or less. The content of Ni is more preferably 8.00% or less, even more preferably 7.00% or less, and most preferably 6.00% or less.

### [Cr: 0.4 to 4.0%]

Cr is an element that stabilizes the austenite phase at cryogenic temperatures, and effectively contributes to improving the cryogenic impact toughness and improving the weld metal strength. Moreover, Cr effectively acts to narrow the temperature range of the solid-liquid coexisting region of the molten metal and inhibit the formation of hot cracks. To obtain these effects, the content of Cr is preferably 0.4% or more. The content of Cr is more preferably 0.8% or more, even more preferably 1.0% or more, and most preferably 1.2% or more. On the other hand, if more than 4.0% Cr is contained, Cr carbide forms, which may degrade the cryogenic impact toughness. Therefore, the content of Cr is preferably 4.0% or less. The content of Cr is more preferably 3.5% or less, even more preferably 3.2% or less, and most preferably 2.8% or less.

### [Mo: 0.01 to 3.50%]

Mo is an element that strengthens the austenite grain boundaries, and segregates at the grain boundaries to improve the strength of the weld metal. Moreover, Mo has an action of improving the strength of the weld metal through solid-solution strengthening. To obtain these effects, the content of Mo is preferably 0.01% or more. The content of Mo is more preferably 0.50% or more, even more preferably 1.00% or more, and most preferably 1.50% or more. On the other hand, if more than 3.50% Mo is contained, the enhancing effect on the weld metal strength becomes restricted, and moreover Mo precipitates as carbide to form a starting point of formation of a fracture, which may degrade the cryogenic impact toughness. Therefore, the content of Mo is preferably 3.50% or less. The content of Mo is more preferably 3.30% or less, even more preferably 3.10% or less, and most preferably 3.00% or less.

### [B: 0.0010% or less]

B is one of elements that segregate at the austenite grain boundaries. When more than 0.0010% B is mixed in, B forms boron nitride at the austenite grain boundaries and degrades the strength. Moreover, the boron nitride forms a starting point of a fracture and may degrade the cryogenic impact toughness. Therefore, the content of B is preferably 0.0010% or less. The content of B is more preferably 0.0008% or less, and even more preferably 0.0005% or less.

### [N: 0.4000% or less]

In the case where a conventional shielding gas composed only of an inert gas (with less than 0.5% nitrogen in vol%) is used, the content of N in the weld metal does not increase; therefore, it is preferable that a filler metal increased in the content of N be used to increase the content of N in the weld metal. In this case, it is preferable that the content of N in the filler metal be 0.4000% or less. If the content of N in the filler metal exceeds 0.4000%, the amount thereof added into the weld metal becomes so large that the intragranular strength becomes excessively high compared with the grain boundary strength, which may result in formation of a fracture from a grain boundary and degradation of the cryogenic impact toughness. Therefore, in the case where the conventional inert gas is used as the shielding gas, the content of N is preferably 0.4000% or less. The content of N is more preferably 0.3800% or less, and even more preferably 0.3600% or less. To set the content of N in the weld metal to 0.0400% or more in the case where the conventional inert gas is used as the shielding gas, it is preferable that the content of N in the filler metal be set to 0.0400% or more. The content of N is more preferably 0.0800% or more, and even more preferably more than 0.1200%.

However, in the case of the method that uses the above-described gas containing 0.5 to 10.0% nitrogen gas in vol% as the shielding gas and adds N from the nitrogen gas into the weld metal, if the content of N in the filler metal is high, the content of N in the weld metal becomes so high that the cryogenic impact toughness degrades. For this reason, it is preferable that the content of N in the filler metal be restricted to 0.1200% or less. The content of N is more preferably 0.1100% or less, and even more preferably 0.1000% or less.

N is an element that effectively contributes to improving the intragranular strength of the weld metal as well as contributes to stably improving the cryogenic impact toughness by stabilizing the austenite phase. To obtain these effects, the content of N is preferably 0.0030% or more. The content of N is more preferably 0.0040% or more, and even more preferably 0.0060% or more.

### [Optionally Selected Composition of Filler Metal]

While the above-described chemical composition is a preferable basic composition for the filler metal to be used in the embodiment, in addition to the basic composition, the following optionally selected components may be contained as necessary. These are at least one type selected from V: 0.01 to 0.04%, Ti: 0.010 to 0.040%, Nb: 0.010 to 0.040%, Cu: 0.01 to 1.00%, Al: 0.010 to 0.100%, and W: 0.01 to 1.00%. Reasons for restricting these optionally selected components are as follows.

### [V: 0.01 to 0.04%]

V is a carbide forming element, and contributes to improving the strength of the weld metal by causing fine carbide to precipitate. To obtain this effect, the content of V is preferably 0.01% or more. On the other hand, if more than 0.04% V is contained, carbide coarsens to form a starting point of formation of a crack during drawing of the filler metal, which may degrade the drawability and thus the manufacturability of the wire. Therefore, the content of V is preferably 0.04% or less.

### [Ti: 0.010 to 0.040%]

Ti is a carbide forming element, and contributes to improving the strength of the weld metal by causing fine carbide to precipitate. Moreover, Ti contributes to inhibiting the formation of hot cracks by causing carbide to precipitate at a solidified cell interface of the weld metal. To obtain these effects, the content of Ti is preferably 0.010% or more. The content of Ti is more preferably 0.015% or more, and even more preferably 0.020% or more. On the other hand, if the content of Ti exceeds 0.040%, carbide coarsens to form a starting point of formation of a crack during drawing of the solid wire, which may degrade the drawability and thus the manufacturability of the wire. Therefore, the content of Ti is preferably 0.040% or less. The content of Ti is more preferably 0.035% or less, and even more preferably 0.030% or less.

### [Nb: 0.010 to 0.040%]

Nb is a carbide forming element, and contributes to improving the strength of the weld metal by causing carbide to precipitate. Moreover, Nb contributes to inhibiting the formation of hot cracks by causing carbide to precipitate at a solidified cell interface of the weld metal. To obtain these effects, the content of Nb is preferably 0.010% or more. The content of Nb is more preferably 0.015% or more, and even more preferably 0.020% or more. On the other hand, if the content of Nb exceeds 0.040%, carbide coarsens to form a starting point of formation of a crack during drawing of the solid wire, which may degrade the drawability and thus the manufacturability of the wire. Therefore, the content of Nb is preferably 0.040% or less. The content of Nb is more preferably 0.035% or less, and even more preferably 0.030% or less.

### [Cu: 0.01 to 1.00%]

Cu is an element that stabilizes the austenite phase, and even at cryogenic temperatures, stabilizes the austenite phase and improves the cryogenic impact toughness of the weld metal. To obtain this effect, the content of Cu is preferably 0.01% or more. The content of Cu is more preferably 0.05% or more, and even more preferably 0.10% or more. On the other hand, if the content of Cu exceeds 1.00%, the hot rollability may degrade and thus the manufacturability of the wire may degrade. Therefore, the content of Cu is preferably 1.00% or less. The content of Cu is more preferably 0.70% or less, and even more preferably 0.50% or less.

### [Al: 0.010 to 0.100%]

Al acts as a deoxidizer, and has an important action of increasing the viscosity of the molten metal to stably retain the shape of beads and reduce the generation of spatter. Moreover, Al contributes to inhibiting the formation of hot cracks in the weld metal by raising the liquidus-line temperature of the molten metal. To obtain these effects, the content of Al is preferably 0.010% or more. The content of Al is more preferably 0.020% or more, and even more preferably 0.025% or more. On the other hand, if more than 0.100% Al is contained, the viscosity of the molten metal becomes so high that conversely spatter may increase and defects, such as incomplete penetration, may increase as beads fail to spread. Therefore, the content of Al is preferably 0.100% or less. The content of Al is more preferably 0.060% or less, and even more preferably 0.050% or less.

### [W: 0.01 to 1.00%]

W is an element that contributes to stabilizing the austenite phase as well as improving the strength and the cryogenic impact toughness, and can be contained as necessary. To obtain these effects, 0.01% or more W is preferably contained. The content of W is more preferably 0.02% or more, and even more preferably 0.08% or more. If the content of W exceeds 1.00%, coarse carbonitride increases to form a starting point of a fracture, which degrades the cryogenic impact toughness. Therefore, when W is contained, the content is preferably 1.00% or less. The content of W is more preferably 0.80% or less, and even more preferably 0.70% or less.

### [Composition of Balance of Filler Metal]

The balance of the above-described chemical composition is composed of Fe and unavoidable impurities. As the unavoidable impurities, H, O, Mg, Zn, Re, etc. can be named as examples, and a total of 0.020% or less unavoidable impurities is allowable. Each optionally selected component, when present below its lower limit, does not affect the properties of the filler metal and is therefore considered an allowable unavoidable impurity. As long as the above-described basic composition and optionally selected components are satisfied and the properties of the filler metal are not influenced, elements other than these unavoidable impurities may be contained, and such a form of implementation is also included in the technical scope of the present invention.

### Examples

In the following, the present invention will be further described based on examples. The following examples are merely for describing the present invention more specifically by presenting examples, and are not intended to restrict the scope of the right of the present invention.

### (Example 1)

Molten steel was smelted by a vacuum melting furnace and cast into a casting mold and then bloomed and rolled into slabs (thickness: 150 mm) of the compositions shown in Table 1. Thus, steel stock was obtained. The balance was Fe and unavoidable impurities. Next, the obtained steel stock was charged into a heating furnace and heated to 1250°C, subjected to hot rolling with a finish-rolling end temperature of 850°C, and then immediately subjected to a water-cooling treatment. Thus, steel materials (high-Mn steel) with sheet thicknesses of 12 mm and 30 mm were obtained. The underlines in the table below mean outside the technical range of the present invention.

**[Table 1]**

| Steel material No. | Sheet thickness (mm) | Chemical composition of steel material (mass%) | | | | | | | | | | | | | | |
|---|---|---|---|---|---|---|---|---|---|---|---|---|---|---|---|---|
| | | C | Si | Mn | P | S | Al | Cr | N | O | Mo | V | W | Ni | REM | B |
| A | 12 | 0.46 | 0.43 | 27.1 | 0.008 | 0.004 | 0.030 | 4.1 | 0.0230 | 0.0012 | - | - | - | - | - | - |
| B | 30 | 0.31 | 0.22 | 27.9 | 0.007 | 0.004 | 0.040 | 3.4 | 0.0281 | 0.0023 | - | 0.90 | - | - | 0.0081 | 0.0013 |
| C | 12 | 0.68 | 0.82 | 20.3 | 0.010 | 0.003 | 0.030 | 4.6 | 0.0130 | 0.0014 | 1.01 | - | 1.22 | 2.32 | - | - |
| D | 12 | 0.54 | 0.53 | 16.2 | 0.021 | 0.006 | 0.050 | 9.8 | 0.0218 | 0.0037 | 0.64 | - | - | 0.21 | - | - |
| E | 12 | 0.88 | 0.52 | 24.1 | 0.097 | 0.008 | 0.040 | 3.0 | 0.0189 | 0.0021 | - | - | - | - | - | - |

| | | | | | | | | | | | | | | | | |
|---|---|---|---|---|---|---|---|---|---|---|---|---|---|---|---|---|
| Note: "-" means not added. | | | | | | | | | | | | | | | | |

Next, molten steels having the compositions shown in Table 2 were smelted by a vacuum melting furnace and cast into 1000 kg of steel ingots. The balance was Fe and unavoidable impurities. The obtained steel ingots were heated to 1200°C, then subjected to hot rolling followed by cold rolling, and annealed (900°C to 1200°C) as necessary. Thus, filler metals (filler rods) for TIG welding with a diameter of 2.0 mm and a length of 1000 mm were obtained.

**[Table 2]**

| Filler metal No. | Chemical composition of filler metal (mass%) | | | | | | | | | | | | | | | |
|---|---|---|---|---|---|---|---|---|---|---|---|---|---|---|---|---|
| | C | Si | Mn | P | S | Ni | Cr | Mo | B | N | V | Ti | Nb | Cu | Al | W |
| a | 0.49 | 0.54 | 20.3 | 0.010 | 0.010 | 5.29 | 2.5 | 1.49 | 0.0003 | 0.0090 | 0.02 | - | - | 0.13 | - | - |
| b | 0.46 | 0.53 | 20.6 | 0.009 | 0.008 | 5.20 | 2.5 | 1.52 | 0.0003 | 0.1500 | 0.02 | - | - | 0.12 | - | - |
| c | 0.63 | 0.64 | 18.7 | 0.010 | 0.010 | 1.21 | 1.4 | 2.87 | 0.0003 | 0.0120 | - | 0.030 | - | - | 0.090 | - |
| d | 0.65 | 0.63 | 18.9 | 0.010 | 0.010 | 1.30 | 1.5 | 2.92 | 0.0003 | 0.2980 | - | 0.030 | - | - | 0.100 | - |
| e | 0.01 | 0.27 | 31.3 | 0.030 | 0.010 | 7.69 | - | 5.60 | 0.0004 | 0.0080 | - | 0.020 | 0.030 | - | - | - |
| f | 0.01 | 0.29 | 30.5 | 0.030 | 0.009 | 8.03 | - | 5.50 | 0.0004 | 0.3780 | - | 0.020 | 0.030 | - | - | - |
| g | 0.52 | 0.29 | 22.3 | 0.010 | 0.010 | - | - | 1.32 | - | 0.0100 | - | 1.010 | - | - | - | 0.71 |
| h | 0.51 | 0.31 | 22.8 | 0.010 | 0.010 | - | - | 1.26 | - | 0.1980 | - | 0.980 | - | - | - | 0.75 |
| i | 0.46 | 0.53 | 21.8 | 0.010 | 0.010 | - | - | - | - | 0.0090 | 0.88 | - | 0.840 | 1.12 | - | - |
| j | 0.43 | 0.55 | 22.8 | 0.010 | 0.010 | - | - | - | - | 0.2410 | 0.83 | - | 0.840 | 1.04 | - | - |
| k | 0.17 | 0.42 | 2.6 | 0.016 | 0.015 | 14.95 | 25.0 | 1.76 | - | 0.0100 | - | - | - | - | 0.020 | - |
| l | 0.18 | 0.48 | 2.7 | 0.018 | 0.013 | 14.84 | 25.1 | 1.82 | - | 0.1810 | - | - | - | - | 0.020 | - |

| | | | | | | | | | | | | | | | | |
|---|---|---|---|---|---|---|---|---|---|---|---|---|---|---|---|---|
| Note: "-" means not added. | | | | | | | | | | | | | | | | |

Next, using the obtained steel materials (with sheet thicknesses of 12 mm and 30 mm) and filler metals (filler rods) for TIG welding, pieces of each steel material were butted so as to form a V-groove with a groove angle θ of 45° in accordance with JIS Z 3121: 2013, and TIG welding was performed under the conditions of the combinations shown in Table 3. Weld metal was formed inside the aforementioned groove to obtain a welded joint. This TIG welding was performed in a downward position, without preheating, using each of the filler metals (2.0 mm in diameter) having the compositions shown in Table 2. The welding conditions were as follows: current: electrode minus within a range of 200 to 230 A (DCEN), voltage: within a range of 12 to 16 V, welding rate: within a range of 8 to 14 cm/min, and inter-pass temperature: within a range of 100 to 150°C. The welding conditions used are shown in Table 3. The electrode was a pure-tungsten rod (3.2 mm in diameter).

**[Table 3]**

| Welded joint No. | Steel material No. | Filler metal No. | Shielding gas for welding (vol%) | Current (A) | Voltage (V) | Welding rate (cm/min) | Heat input (kJ/cm) |
|---|---|---|---|---|---|---|---|
| 1 | A | a | 100%Ar | 200 | 12 | 8 | 18.0 |
| 2 | A | a | 98%Ar-2%N₂ | 200 | 12 | 8 | 18.0 |
| 3 | A | a | 95%Ar-5%N₂ | 200 | 12 | 8 | 18.0 |
| 4 | A | a | 85%Ar-15%N₂ | 200 | 12 | 8 | 18.0 |
| 5 | A | b | 100%Ar | 200 | 12 | 8 | 18.0 |
| 6 | B | c | 100%Ar | 230 | 16 | 10 | 22.1 |
| 7 | B | c | 98%Ar-2%N₂ | 230 | 16 | 10 | 22.1 |
| 8 | B | c | 95%Ar-5%N₂ | 230 | 16 | 10 | 22.1 |
| 9 | B | c | 85%Ar-15%N₂ | 230 | 16 | 10 | 22.1 |
| 10 | B | d | 100%Ar | 230 | 16 | 10 | 22.1 |
| 11 | C | e | 100%Ar | 200 | 12 | 14 | 10.3 |
| 12 | C | e | 98%Ar-2%N₂ | 200 | 12 | 14 | 10.3 |
| 13 | C | e | 95%Ar-5%N₂ | 200 | 12 | 14 | 10.3 |
| 14 | C | e | 85%Ar-15%N₂ | 200 | 12 | 14 | 10.3 |
| 15 | C | f | 100%Ar | 200 | 12 | 14 | 10.3 |
| 16 | D | a | 100%Ar | 200 | 12 | 8 | 18.0 |
| 17 | D | b | 100%Ar | 200 | 12 | 8 | 18.0 |
| 18 | E | a | 100%Ar | 200 | 12 | 8 | 18.0 |
| 19 | E | b | 100%Ar | 200 | 12 | 8 | 18.0 |
| 20 | C | g | 100%Ar | 200 | 12 | 8 | 18.0 |
| 21 | C | h | 100%Ar | 200 | 12 | 8 | 18.0 |
| 22 | C | i | 100%Ar | 200 | 12 | 8 | 18.0 |
| 23 | C | j | 100%Ar | 200 | 12 | 8 | 18.0 |
| 24 | C | k | 100%Ar | 200 | 12 | 8 | 18.0 |
| 25 | C | l | 100%Ar | 200 | 12 | 8 | 18.0 |

### [Analysis of Composition of Weld Metal]

At the weld metal part of each welded joint, a 5 mm block was sampled from a portion at the center in the sheet thickness and at the center of the welding line, and an analysis of the composition of the weld metal was performed. In addition, a total content of N in the weld metal was measured by an inert gas fusion-heat conductance method. The result is shown in Table 4.

**[Table 4]**

| Weld joint No. | Steel material No. | Filler metal No. | Chemical composition of weld metal (mass%) | | | | | | | | | | | | | | | |
|---|---|---|---|---|---|---|---|---|---|---|---|---|---|---|---|---|---|---|
| | | | C | Si | Mn | P | S | Al | Cr | Mo | Ni | N | V | Ti | Nb | W | Cu | B |
| 1 | A | a | 0.48 | 0.52 | 21.7 | 0.010 | 0.009 | 0.006 | 2.8 | 1.19 | 4.23 | 0.0118 | 0.02 | - | - | - | 0.10 | 0.0002 |
| 2 | A | a | 0.49 | 0.52 | 21.6 | 0.009 | 0.009 | 0.006 | 2.8 | 1.19 | 4.31 | 0.0530 | 0.02 | - | - | - | 0.10 | 0.0002 |
| 3 | A | a | 0.46 | 0.51 | 21.1 | 0.010 | 0.010 | 0.006 | 3.0 | 1.21 | 4.28 | 0.1238 | 0.02 | - | - | - | 0.10 | 0.0002 |
| 4 | A | a | 0.48 | 0.52 | 21.8 | 0.008 | 0.009 | 0.006 | 2.8 | 1.16 | 4.24 | 0.4680 | 0.02 | - | - | - | 0.10 | 0.0003 |
| 5 | A | b | 0.49 | 0.49 | 21.9 | 0.009 | 0.007 | 0.006 | 2.7 | 1.22 | 4.16 | 0.1250 | 0.02 | - | - | - | 0.10 | 0.0002 |
| 6 | B | c | 0.57 | 0.56 | 20.5 | 0.009 | 0.009 | 0.080 | 1.8 | 2.30 | 0.97 | 0.0152 | 0.18 | 0.024 | - | - | - | 0.0029 |
| 7 | B | c | 0.56 | 0.55 | 19.9 | 0.010 | 0.010 | 0.080 | 1.8 | 2.30 | 1.00 | 0.0534 | 0.18 | 0.024 | - | - | - | 0.0031 |
| 8 | B | c | 0.55 | 0.56 | 20.4 | 0.010 | 0.009 | 0.080 | 1.7 | 2.33 | 0.99 | 0.1200 | 0.16 | 0.024 | - | - | - | 0.0032 |
| 9 | B | c | 0.59 | 0.56 | 20.0 | 0.009 | 0.009 | 0.080 | 1.8 | 2.30 | 0.97 | 0.4430 | 0.17 | 0.024 | - | - | - | 0.0030 |
| 10 | B | d | 0.58 | 0.54 | 20.7 | 0.009 | 0.009 | 0.088 | 1.9 | 2.34 | 1.04 | 0.2440 | 0.18 | 0.024 | - | - | - | 0.0030 |
| 11 | C | e | 0.14 | 0.35 | 29.1 | 0.026 | 0.012 | 0.006 | 0.9 | 4.68 | 6.62 | 0.0090 | - | 0.016 | 0.024 | 0.24 | - | 0.0003 |
| 12 | C | e | 0.14 | 0.34 | 29.1 | 0.026 | 0.009 | 0.006 | 1.0 | 4.70 | 6.54 | 0.0820 | - | 0.016 | 0.024 | 0.25 | - | 0.0002 |
| 13 | C | e | 0.14 | 0.33 | 28.8 | 0.026 | 0.009 | 0.006 | 1.0 | 4.69 | 6.62 | 0.1690 | - | 0.016 | 0.024 | 0.24 | - | 0.0003 |
| 14 | C | e | 0.14 | 0.38 | 28.9 | 0.026 | 0.010 | 0.006 | 0.9 | 4.68 | 6.62 | 0.5320 | - | 0.016 | 0.024 | 0.23 | - | 0.0003 |
| 15 | C | f | 0.14 | 0.37 | 28.5 | 0.026 | 0.008 | 0.006 | 0.9 | 4.60 | 6.89 | 0.3050 | - | 0.016 | 0.024 | 0.24 | - | 0.0002 |
| 16 | D | a | 0.50 | 0.54 | 19.5 | 0.011 | 0.009 | 0.010 | 4.0 | 1.32 | 4.27 | 0.0116 | 0.02 | - | - | - | 0.10 | 0.0003 |
| 17 | D | b | 0.48 | 0.53 | 19.7 | 0.011 | 0.010 | 0.010 | 3.8 | 1.34 | 4.20 | 0.1084 | 0.02 | - | - | - | 0.10 | 0.0002 |
| 18 | E | a | 0.57 | 0.54 | 21.1 | 0.036 | 0.010 | 0.008 | 2.6 | 1.19 | 4.23 | 0.0110 | 0.02 | - | - | - | 0.10 | 0.0001 |
| 19 | E | b | 0.54 | 0.53 | 21.3 | 0.035 | 0.008 | 0.008 | 2.6 | 1.22 | 4.16 | 0.1078 | 0.02 | - | - | - | 0.10 | 0.0003 |
| 20 | C | g | 0.55 | 0.40 | 21.9 | 0.010 | 0.009 | 0.006 | 0.9 | 1.26 | 0.46 | 0.0106 | - | 0.808 | - | 0.81 | - | 0.0001 |
| 21 | C | h | 0.54 | 0.41 | 22.3 | 0.010 | 0.009 | 0.006 | 1.0 | 1.21 | 0.46 | 0.1610 | - | 0.784 | - | 0.84 | - | 0.0002 |
| 22 | C | i | 0.50 | 0.59 | 21.5 | 0.010 | 0.009 | 0.006 | 0.9 | 0.20 | 0.45 | 0.0098 | 0.70 | - | 0.672 | 0.24 | 0.90 | - |
| 23 | C | j | 0.48 | 0.60 | 22.3 | 0.010 | 0.009 | 0.006 | 0.9 | 0.20 | 0.46 | 0.1954 | 0.66 | - | 0.677 | 0.24 | 0.83 | - |
| 24 | C | k | 0.27 | 0.50 | 6.2 | 0.015 | 0.013 | 0.022 | 20.9 | 1.61 | 12.42 | 0.0106 | - | - | - | 0.24 | - | - |
| 25 | C | l | 0.28 | 0.55 | 6.2 | 0.016 | 0.011 | 0.022 | 21.0 | 1.66 | 12.34 | 0.1474 | - | - | - | 0.24 | - | - |

| | | | | | | | | | | | | | | | | | | |
|---|---|---|---|---|---|---|---|---|---|---|---|---|---|---|---|---|---|---|
| Note: "-" means under the analytical lower limit | | | | | | | | | | | | | | | | | | |

### [Evaluation on Hot Cracking Resistance]

After the welding, a 10 mm-thick macro test specimen was sampled from the center position in the direction of the welding line by a microcutter such that the surface to be observed was a cross-section perpendicular to the welding line, and the cross-section of the weld metal was observed under an optical microscope (30x) to determine whether or not there were any hot cracks. Here, in a test specimen in which hot cracks were observed, a long thin black region 25 µm wide and 80 µm long or larger was recognized. When formation of a hot crack was recognized, the evaluation result is "present," and when it was not recognized, the evaluation result is "absent." Whether or not pits or blowholes were formed was also determined.

Further, from each of the welded joints, a flat-plate test specimen 5 mm thick, 50 mm wide, and 100 mm long was cut out. Here, a surface obtained by grinding the joint from the front surface to a depth of 1 mm was used as the test specimen surface, and to make the test specimen 5 mm thick, the portion corresponding to the remaining thickness was ground off from the back surface. Thereafter, evaluation on hot cracking susceptibility of the weld metal part of the joint was performed by the Trans-Varestraint test. This test involves performing melt-run welding by a TIG arc and rapidly dropping yokes at both ends of a test specimen at the same time as extinction of the arc to thereby apply tensile strain and forcibly cause hot cracking in the bead surface. The strain applied was within a range of 2.4 to 5.8%, which corresponded to a saturation strain value of a maximum crack length. A solidification brittleness temperature range [BTR (K)] was calculated from a saturation value of a maximum cracking strain obtained from the strains, and the hot cracking susceptibility of each material was evaluated.

### [Evaluation of Properties of Weld Metal]

From each of the obtained welded joints, a tensile test specimen (having a diameter of 6 mm at the parallel portion) of the weld metal was sampled in accordance with the specifications of JIS Z 3111: 2005, and a tensile test was performed. The tensile test was performed on three test specimens for each weld metal at room temperature, and average values of the obtained values (0.2% proof stress, tensile strength) were regarded as the tensile properties of the weld metal of that welded joint.

In addition, a Charpy impact test of the weld metal was performed in accordance with the specifications of JIS Z 3128: 2017. The sampling position of the test specimen (V-notch) is shown in Fig. 2. The direction of a V-notch 8 of a test specimen 6 is perpendicular to the surface of the base metal 1. The test specimen 6 was sampled from a position 1 mm below the surface of the base metal 1 such that the position of the V-notch 8 coincides with the position of the middle point between fusion lines 5 of the weld metal 2 on a centerline 7 of the test specimen. The Charpy impact test was also performed on three test specimens for each weld metal, and the absorbing energy at a test temperature of -196°C (ᵥE₋₁₉₆) was obtained. The average value thereof was regarded as the cryogenic impact toughness of the weld metal of that welded joint.

As described above, the target values of the present invention are as follows: the yield stress (0.2% proof stress) and the tensile strength at room temperature of the weld metal improves by 10 MPa or more on average, compared with a conventional TIG welded joint in which the filler metal has a usual content of N and for which a gas composed of 99.5% or more inert gas, with the balance being composed of unavoidable impurities, is used as the shielding gas. Further, the absorbing energy (ᵥE₋₁₉₆) of the weld metal in a Charpy impact test is 28 J or higher.

The obtained results are shown in Table 5.

**[Table 5]**

| Weld joint No. | Steel material No. | Filler metal No. | N content in filler metal (mass%) | Shielding gas for welding (vol%) | Hot crack | | Formation of pit/blowhole | N content in weld metal (mass%) | 0.2% proof stress of weld metal (MPa) | Difference in 0.2% proof stress from reference (MPa) | Tensile strength of weld metal (MPa) | Difference in tensile strength from reference (MPa) | Absorbing energy ᵥE-₁₉₆ (J) of weld metal at -196°C | Remarks |
|---|---|---|---|---|---|---|---|---|---|---|---|---|---|---|
| | | | | | Evaluation on presence/absence of crack by observation | Solidification brittleness temperature range BTR (K) | | | | | | | | |
| 1 | A | a | 0.0090 | 100%Ar | Absent | 228 | Not formed | 0.012 | 435 | - | 771 | - | 135 | Comparative Example |
| 2 | A | a | 0.0090 | 98%Ar-2%N₂ | Absent | 199 | Not formed | 0.053 | 460 | 25 | 791 | 20 | 128 | Invention Example |
| 3 | A | a | 0.0090 | 95%Ar-5%N₂ | Absent | 173 | Not formed | 0.124 | 479 | 44 | 823 | 52 | 101 | Invention Example |
| 4 | A | a | 0.0090 | 85%Ar-15%N₂ | Not determinable | - | Formed | 0.468 | - | - | - | - | - | Comparative Example |
| 5 | A | b | 0.1500 | 100%Ar | Absent | 175 | Not formed | 0.125 | 490 | 55 | 824 | 53 | 96 | Invention Example |
| 6 | B | c | 0.0120 | 100%Ar | Absent | 246 | Not formed | 0.015 | 457 | - | 764 | - | 102 | Comparative Example |
| 7 | B | c | 0.0120 | 98%Ar-2%N₂ | Absent | 230 | Not formed | 0.053 | 502 | 45 | 803 | 39 | 88 | Invention Example |
| 8 | B | c | 0.0120 | 95%Ar-5%N₂ | Absent | 212 | Not formed | 0.120 | 540 | 83 | 851 | 87 | 94 | Invention Example |
| 9 | B | c | 0.0120 | 85%Ar-15%N₂ | Not determinable | - | Formed | 0.443 | - | - | - | - | - | Comparative Example |
| 10 | B | d | 0.2980 | 100%Ar | Absent | 197 | Not formed | 0.244 | 478 | 21 | 858 | 94 | 96 | Invention Example |
| 11 | C | e | 0.0080 | 100%Ar | Absent | 299 | Not formed | 0.009 | 356 | - | 668 | - | 27 | Comparative Example |
| 12 | C | e | 0.0080 | 98%Ar-2%N₂ | Absent | 279 | Not formed | 0.082 | 376 | 20 | 699 | 31 | 19 | Comparative Example |
| 13 | C | e | 0.0080 | 95%Ar-5%N₂ | Absent | 264 | Not formed | 0.169 | 389 | 33 | 734 | 66 | 19 | Comparative Example |
| 14 | C | e | 0.0080 | 85%Ar-15%N₂ | Not determinable | - | Formed | 0.532 | - | - | - | - | - | Comparative Example |
| 15 | C | f | 0.3780 | 100%Ar | Absent | 254 | Not formed | 0.305 | 428 | 72 | 752 | 84 | 21 | Comparative Example |
| 16 | D | a | 0.0090 | 100%Ar | Absent | 224 | Not formed | 0.012 | 452 | - | 824 | - | 101 | Comparative Example |
| 17 | D | b | 0.1500 | 100%Ar | Absent | 206 | Not formed | 0.108 | 504 | 52 | 877 | 53 | 92 | Comparative Example |
| 18 | E | a | 0.0090 | 100%Ar | Present | 359 | Not formed | 0.011 | 451 | - | 784 | - | 132 | Comparative Example |
| 19 | E | b | 0.1500 | 100%Ar | Absent | 301 | Not formed | 0.108 | 486 | 35 | 827 | 43 | 108 | Comparative Example |
| 20 | C | g | 0.0100 | 100%Ar | Absent | 181 | Not formed | 0.011 | 528 | - | 942 | - | 80 | Comparative Example |
| 21 | C | h | 0.1980 | 100%Ar | Absent | 157 | Not formed | 0.161 | 579 | 51 | 977 | 35 | 73 | Invention Example |
| 22 | C | i | 0.0090 | 100%Ar | Absent | 162 | Not formed | 0.010 | 428 | - | 832 | - | 97 | Comparative Example |
| 23 | C | j | 0.2410 | 100%Ar | Absent | 131 | Not formed | 0.195 | 454 | 26 | 873 | 41 | 91 | Invention Example |
| 24 | C | k | 0.0100 | 100%Ar | Absent | 266 | Not formed | 0.011 | 474 | - | 662 | - | 43 | Comparative Example |
| 25 | C | 1 | 0.1810 | 100%Ar | Absent | 277 | Not formed | 0.147 | 451 | -23 | 631 | -31 | 25 | Comparative Example |

Each welded joint indicated as Invention Example in the remarks column of Table 5 is a welded joint with excellent hot cracking resistance that does not develop hot cracks during welding. Based on a conventional TIG welded joint (Comparative Example) for which an inert gas was used for 99.5 vol% or more of the shielding gas and the content of N in the filler metal was less than 0.0400 mass%, the mechanical properties were compared between a case where a nitrogen gas was mixed into the shielding gas and a case where the content of N in the filler metal was increased. As a result, in Invention Examples, the yield stress (0.2% proof stress) and the tensile strength improved by 10 MPa or more on average. Further, the BTR decreased and the hot cracking susceptibility improved. Thus, excellent mechanical properties of the weld metal, namely, yield stress (0.2% proof stress) of 400 MPa or higher, tensile strength of 600 MPa or higher, and Charpy impact absorbing energy (ᵥE₋₁₉₆) of 28 J or higher, were obtained.

For example, in welded joint No. 1 (a combination of steel material No. A and filler metal No. a), the shielding gas is of 100 vol% Ar gas, and welded joints Nos. 2 to 4 are examples in which the weld was produced using the same combination but with the content of the nitrogen gas in the shielding gas increased to 2 vol%, 5 vol%, and 15 vol%, respectively. Welded joint No. 5 is an example in which, instead of filler metal No. a, filler metal No. b that has a higher content of N but the same composition other than the content of N was combined. As a result, while the content of N in the weld metal was 0.012 mass% in welded joint No. 1, it was increased to 0.053 mass% in welded joint No. 2, to 0.124 mass% in welded joint No. 3, and to 0.125 mass% in welded joint No. 5 for which filler metal No. b was used. In none of these welded joints, hot cracks and pits or blowholes occurred. However, in welded joint No. 4 in which the content of N in the nitrogen gas was increased to 15 vol%, the content of N in the weld metal was increased to 0.468 mass% and blowholes occurred, which resulted in welding failure and made it impossible to determine hot cracking. The same results were obtained for welded joints Nos. 6 to 10.

In welded joint No. 11 (a combination of steel material No. C and filler metal No. e), the content of C in filler metal No. e was so low that the strength became insufficient, and the toughness degraded due to the high content of Mn, resulting in low Charpy impact absorbing energy. However, in welded joint No. 12 in which 2 vol% nitrogen gas was contained in the shielding gas, welded joint No. 13 in which 5 vol% nitrogen gas was contained, and welded joint No. 15 in which filler metal No. f having the same composition as filler metal No. e except for having a higher content of N is combined, the strength improved and hot cracking did not occur. This result demonstrated that even when the composition of the base metal or the welding conditions are not adjusted to improve the strength of the welded joint, simply mixing a nitrogen gas in the shielding gas or increasing the content of N in the filler metal was effective for improving the strength. The examples of welded joints Nos. 16 to 23 are also examples where the content of N in the filler metal was increased, and similarly an improving effect on the strength of the weld metal was seen.

On the other hand, welded joints Nos. 24 and 25 have a low content of Mn in the weld metal and do not have an austenite single phase, so that even when the content of N was increased, no improvement was seen in the strength and the toughness.

### [Relationship between Strength of Weld Metal and Content of Nitrogen in Shielding Gas or Content of N in Filler Metal]

Based on the data of Table 5, changes in the 0.2% proof stress and changes in the tensile strength relative to the content of N in the weld metal were sorted by the method of adding N, which was either the method that adds N by mixing a nitrogen gas in the shielding gas or the method that adds N by increasing the content of N in the filler metal.

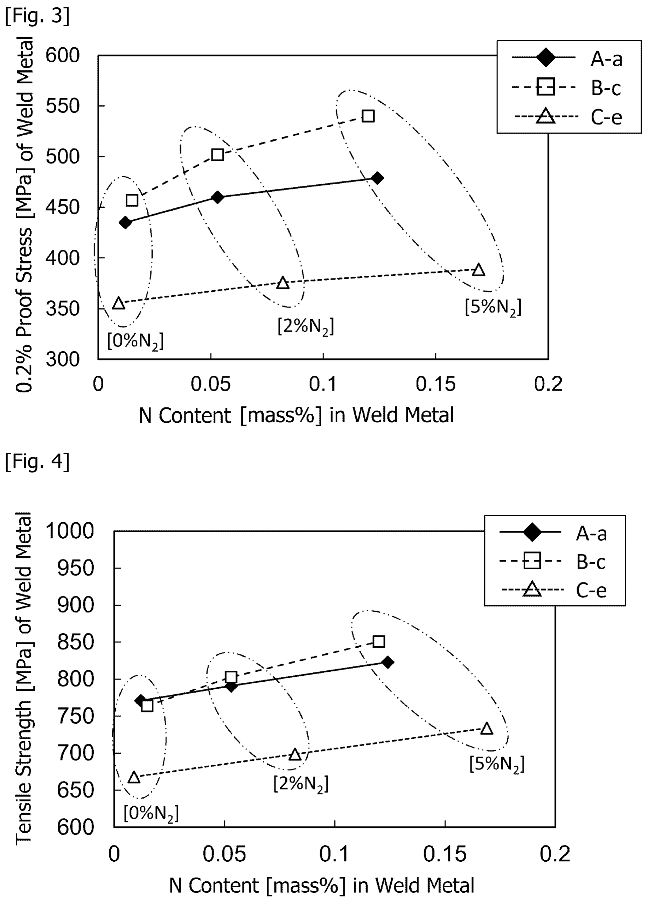

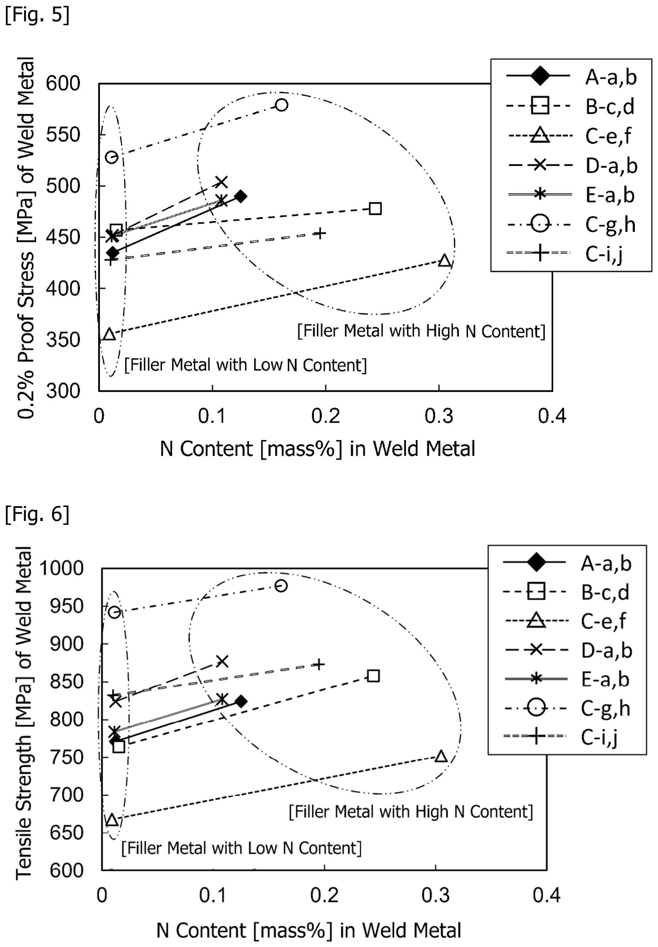

Fig. 3 is a graph showing changes in the 0.2% proof stress relative to the content of N in the weld metal according to changes in the content of the nitrogen gas in the shielding gas for welding. Fig. 4 is a graph showing changes in the tensile strength relative to the content of N in the weld metal according to changes in the content of the nitrogen gas in the shielding gas for welding. Fig. 5 is a graph showing changes in the 0.2% proof stress relative to the content of N in the weld metal according to changes in the content of N in the filler metal. Fig. 6 is a graph showing changes in the tensile strength relative to the content of N in the weld metal according to changes in the content of N in the filler metal. Here, for Fig. 3 and Fig. 4, data were sorted by level into groups and each group was enclosed by the dash-double-dot line ellipse, with the content of nitrogen in the shielding gas indicated in parentheses. For Fig. 5 and Fig. 6, data were sorted into separate groups based on whether the content of N in the filler metal was high or low and each group was enclosed by the dash-double-dot line ellipse.

As can be seen from Fig. 3, when using a combination of the same steel material and the same filler metal and changing the content of the nitrogen gas in the shielding gas, the 0.2% proof stress becomes higher when 2 vol% nitrogen gas is contained, and even higher when 5 vol% nitrogen gas is contained, than when only an inert gas is used. This is exactly the same in the case of the tensile strength of Fig. 4: as the content of nitrogen gas increases to 2 vol% and to 5 vol%, the tensile strength becomes higher. Similarly, in Fig. 5 and Fig. 6, as the content of N in the filler metal increases, the strength improves accordingly. From the data of Table 5, it can be seen that in each combination, the 0.2% proof stress and the tensile strength improve by 10 MPa or more under the condition where the content of N in the weld metal is increased compared with the reference condition. These results confirmed that the technology according to the present invention that increases the content of N in the weld metal is effective for improving the strength of the weld metal.

### Reference Signs List

- 1: Base metal (steel material)
- 2: Weld metal
- 2a: Weld metal layer
- 3: Groove surface
- 4: Solidification crack
- 5: Fusion line
- 6: Test specimen
- 7: Centerline of test specimen
- 8: V-notch
- t: Sheet thickness
- θ: Groove angle

## Claims

1. A gas tungsten arc-welded joint of pieces of a steel material produced using a shielding gas and a filler metal, **characterized in that**:
the steel material is austenitic steel with a high Mn content;
a chemical composition of the steel material comprises, in mass%,
C: 0.10 to 0.70%,
Si: 0.05 to 1.00%,
Mn: 18.0 to 30.0%,
P: 0.030% or less,
S: 0.007% or less,
Al: 0.010 to 0.070%,
Cr: 2.5 to 7.0%,
N: 0.0050 to 0.0500%, and
O (oxygen): 0.0050% or less, and
comprises, optionally and selectively, at least one type selected from the group consisting of
Mo: 0.01 to 2.00%,
V: 0.01 to 2.00%,
W: 0.01 to 2.00%,
Ni: 0.01 to 4.00%,
REM: 0.0010 to 0.0200%, and
B: 0.0005 to 0.0020%,
with the balance being composed of Fe and unavoidable impurities; and
a chemical composition of weld metal comprises, in mass%,
C: 0.15 to 0.80%,
Si: 0.10 to 1.00%,
Mn: 17.0 to 30.0%,
P: 0.030% or less,
S: 0.030% or less,
Al: 0.005 to 0.100%,
Cr: 0.4 to 5.5%,
Mo: 0.01 to 3.50%,
Ni: 0.01 to 10.00%, and
N: 0.0400 to 0.4000%, and
comprises, optionally and selectively, at least one type selected from the group consisting of
V: 0.01 to 1.00%,
Ti: 0.010 to 1.000%,
Nb: 0.010 to 1.000%,
W: 0.01 to 1.00%,
Cu: 0.01 to 1.00%, and
B: 0.0010% or less,
with the balance being composed of Fe and unavoidable impurities.

2. The gas tungsten arc-welded joint according to claim 1, wherein
the weld metal has yield stress (0.2% proof stress) of 400 MPa or higher, tensile strength of 600 MPa or higher, and Charpy impact absorbing energy (ᵥE₋₁₉₆) of 28 J or higher.

3. A production method of a gas tungsten arc-welded joint that forms weld metal having the chemical composition according to claim 1 between pieces of a steel material having the chemical composition according to claim 1 by using a shielding gas and a filler metal, wherein
the shielding gas contains a nitrogen gas within a range of 0.5 to 10.0% in vol%, with the balance being composed of an inert gas and unavoidable impurities.

4. The production method of a gas tungsten arc-welded joint according to claim 3, wherein
a content of N in the filler metal is 0.1200% or less in mass%.

5. A production method of a gas tungsten arc-welded joint that forms weld metal having the chemical composition according to claim 1 between pieces of a steel material having the chemical composition according to claim 1 by using a shielding gas and a filler metal, wherein
the shielding gas contains less than 0.5% nitrogen gas in vol%, with the balance being composed of an inert gas and unavoidable impurities, and
a content of N in the filler metal is 0.4000% or less in mass%.

6. The production method of a gas tungsten arc-welded joint according to any one of claims 3 to 5, wherein the weld metal is formed so as to have yield stress (0.2% proof stress) of 400 MPa or higher, tensile strength of 600 MPa or higher, and Charpy impact absorbing energy (ᵥE₋₁₉₆) of 28 J or higher.
